# EUROPEAN PATENT SPECIFICATION

(11) **EP 1 419 873 B1**
(45) Date of publication and mention of the grant of the patent: **09.01.2008**
(21) Application number: 03025464.3
(22) Date of filing: 06.11.2003
(51) Int. Cl.: B29C 69/02, B29C 53/44, B29C 53/62, B29C 43/42

(54) **Method for manufacturing rotation symmetrical objects made of polymeric material**
Vefahren zur Herstellung von rotationssymmetrischen Kunststoffteilen
Procédé de fabrication d'objets ayants une symétrie de rotation en matière plastiques

(30) Priority: 14.11.2002 IT PD20020290
(43) Date of publication of application: 19.05.2004
(73) Proprietor: Plastek S.r.l., 45010 Villadose (RO) (IT)
(72) Inventor: Chiarion, Claudio, 45010 Gavello (RO) (IT)
(74) Representative: Modiano, Micaela Nadia

(56) References cited:
- WO-A-92/16370
- GB-A- 1 197 595
- US-A- 3 967 991
- US-A- 4 655 769
- US-A- 4 768 323
- US-A- 5 840 347

## Description

The present invention relates to a method for manufacturing objects of revolution made of polymeric material, particularly but not exclusively for reducers and connectors for pipes or the like.

Injection-molding processes are currently used to manufacture objects of revolution made of polymeric material, such as for example reducers and connectors for pipes.

These objects, once molded, must be reworked to perform dimensional rectification of the part in order to fall within the tolerance range required by international standards.

These objects, generally made of polyethylene or polypropylene, have extremely variable dimensions, with an outside diameter comprised for example between 20 mm and 1500 mm and a length comprised for example between 60 mm and 200 mm.

In view of the large maximum dimensions that these objects can reach, it is evident that their manufacture requires very large molds and accordingly requires very powerful and large injection-molding presses.

The cost of these machines and equipment is very high and not all companies are capable of amortizing these costs with their own production.

Another way to manufacture these objects is to start from sheets of polypropylene or polyethylene of suitable dimensions and obtain the finished object by chip-forming machining.

This operating method is extremely expensive if compared to the cost of manufacturing by injection-molding (once plant costs have been amortized).

In addition to the need to work starting from a blank (which has a substantially higher cost than the original raw material), manufacturing times are far longer and there is a very large number of rejects.

WO 92/16370 discloses a method of making a preform for a product from waste plastics materials, the method comprising the steps of preparing a mixture of the waste materials including significant proportions of PET and PE, extruding the mixture into a sheet, passing the sheet while still soft between rolls with a reinforcing layer and applying pressure to create a laminate of the sheet and layer to bond the sheet and layer, cutting the laminate into selected lengths while maintaining the laminate warm sufficient to make the sheet readily deformable, rolling each of the selected lengths into individual intermediate preforms having essentially round cross-sections with the sheet and layer defining parallel spirals in the preform, placing the preform in a mould defining the selected final shape of said elongate product, and applying heat and pressure to the mould to shape the form into the desired shape.

The aim of the present invention is to provide a method for manufacturing objects of revolution made of polymeric material, particularly but not exclusively for reducers and connectors for pipes or the like, that solves the problems noted in known methods.

Within this aim, an object of the present invention is to provide a method for manufacturing objects of revolution made of polymeric material, particularly but not exclusively for reducers and connectors for pipes or the like, that has competitive costs with respect to injection molding.

Another object of the present invention is to provide a method for manufacturing objects of revolution made of polymeric material, particularly but not exclusively for reducers and connectors for pipes or the like, that can be manufactured with known and low-cost equipment and technologies.

This aim and these and other objects that will become better apparent hereinafter are achieved by a method for manufacturing objects of revolution made of polymeric material, particularly but not exclusively for reducers and connectors for pipes or the like, which consists in:
-- performing a hot extrusion of a strip of polymeric material of preset width and thickness,
-- rolling said strip of polymeric material on a rotating drum so as to form a toroidal body that has preset inside and outside diameters, the thickness of said toroidal body being determined by a counter drum which is arranged above said drum and parallel thereto at an adjustable distance,
-- inserting said toroidal body in a mold, the parts of which form a cavity shaped like a body of revolution,
-- closing the parts of said mold with a given closure force,
-- waiting for the forming of the object by cooling inside the mold,
-- opening the mold and extracting the manufactured object.

Further characteristics and advantages of the invention will become better apparent from the following detailed description of a preferred but not exclusive embodiment thereof, illustrated by way of nonlimiting example in the accompanying drawings, wherein:
Figure 1 is a partly sectional view of a first object that can be manufactured with the method according to the invention;
Figure 2 is a partly sectional view of a second object that can be manufactured with the method according to the invention;
Figure 3 is a partly sectional view of a third object that can be manufactured with the method according to the invention;

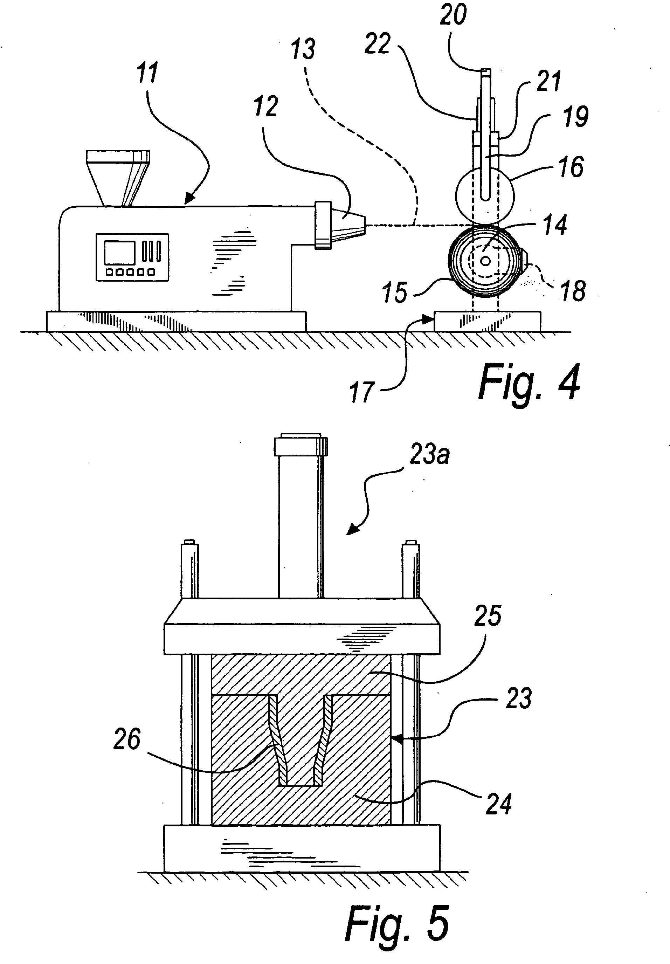

Figure 4 is a schematic view of equipment for performing the method according to the invention;
Figure 5 is a schematic sectional view of a mold associated with a mechanical press for performing the method according to the invention.

With reference to the figures, an apparatus for performing a method for manufacturing objects of revolution made of polymeric material, according to the invention, comprises an extruder 11, an extrusion head 12 of which outputs a strip 13 made of polymeric material, such as for example high-density polyethylene or, as an alternative, polypropylene.

The exit temperature of the strip is substantially the same as the temperature to which the polymeric material is brought inside the extruder 11 (for example approximately 200 °C for polyethylene).

The strip 13 is rolled onto a rotating drum 14 so as to form a toroidal body 15 whose thickness is determined by a counter drum 16, which is arranged above the drum 14 and parallel thereto at an adjustable preset distance.

The rotating drum is pivoted on a frame 17 and is driven by means of an electric motor 18.

The counter drum 16 is pivoted to two posts 19, which are connected in an upper region by a beam 20 and can slide on corresponding guides formed on a cantilevered portion 21 of the frame 17 that is arranged above the drum 14 and parallel thereto.

A pneumatic cylinder 22 acts between the cantilevered portion 21 and the beam 20 and allows to adjust the distance of the contrast drum 16 with respect to the drum 14.

During rolling, the thickness of the toroidal body 15 increases at each turn until it reaches the preset value.

The cylinder 22 allows the counter drum 16 to remain always in contact with the strip 13, rising continuously by the extent equal to the growth in the thickness of said strip.

The width of the strip 13 is preferably comprised between 60 and 300 mm, while its thickness is preferably comprised between 4 and 10 mm.

Once the toroidal body 15 has been obtained, it is extracted from the rotating drum and inserted in a mold 23.

The toroidal body 15, when inserted in the mold 23, has a temperature that is a few tens of degrees lower than the extrusion temperature of the strip 13.

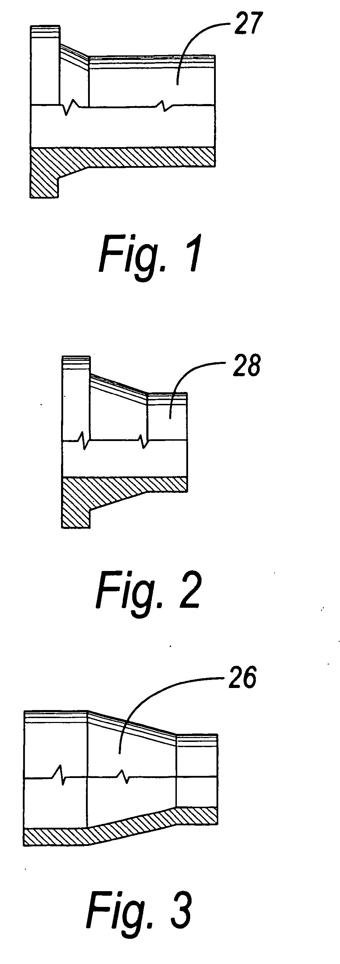

Lower and upper parts 24 and 25 of the mold 23, when coupled together, form a cavity that is shaped like a body of revolution that substantially has the shape of the finished object to be manufactured, for example a reducer 26 shown in Figure 3 or optionally a long pipe with flared flange 27 shown in Figure 1 or a short pipe with flared flange 28 shown in Figure 2.

The mold 23 is associated with a mechanical press 23a of the common type and is water-cooled.

The mold parts 24 and 25 are closed with a given closure force, subsequently waiting while the intended object forms.

Inside the mold 23, the object undergoes cooling.

After a preset time, the mold 23 is opened and the object is extracted (for example at a temperature of 80-100 °C).

At this point there is a wait for a preset time (which can vary substantially within a predefined interval) required to achieve the dimensional stability of said object, placing it to cool at ambient temperature.

Outside the mold, the object in fact begins to warm externally, since the residual heat inside it tends to escape.

This external heating reaches a maximum and then decreases.

This is followed finally by a step for rectification of the object to eliminate the excess material substantially with respect to the nominal dimensions, for example by turning.

In practice it has been found that the invention thus described solves the problems noted in known methods for manufacturing objects of revolution.

In particular, the present invention provides a method for manufacturing objects of revolution made of polymeric material, particularly but not exclusively for reducers and connectors for pipes or the like, that uses inexpensive and common equipment.

Moreover, the production times for a single object of revolution are shorter than the overall production time of the same object produced by injection molding.

Moreover, the unidirectional stretching of the strip of polymeric material increases the mechanical strength characteristics of the object; this is verified in particular in crystalline polymeric materials, such as polyethylene and polypropylene.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for manufacturing objects of revolution made of polymeric material, particularly but not exclusively for reducers and connectors for pipes or the like, comprising the steps of:
-- performing a hot extrusion of a strip (13) of polymeric material of preset width and thickness,
-- rolling said strip (13) of polymeric material onto a rotating drum (14) so as to form a toroidal body (15) that has preset inside and outside diameters, the thickness of said toroidal body being determined by a counter drum (16) which is arranged above said drum (14) and parallel thereto at an adjustable distance,
-- inserting said toroidal body (15) in a mold (23), the parts (24, 25) of which form a cavity shaped like a body of revolution,
-- closing the parts (24, 25) of said mold (23) with a given closure force,
-- waiting for the forming of the object of revolution by cooling inside the mold,
-- opening the mold and extracting the manufactured object of revolution.

2. The method according to claim 1, **characterized in that** it comprises, after the step for extraction of said object from the mold (23) and after waiting for a preset time to achieve the dimensional stability of said object, a step for rectification of said object to eliminate the excess material substantially with respect to the nominal dimensions.

3. The method according to one or more of the preceding claims, **characterized in that** said polymeric material is a polypropylene or polyethylene resin.

4. The method according to one or more of the preceding claims, **characterized in that** the width of said strip (13) is comprised between 60 mm and 300 mm and **in that** the thickness of said strip (13) is comprised between 4 mm and 10 mm.

## Patentansprüche

1. Verfahren zum Herstellen von Rotationsgegenständen aus polymerem Material, insbesondere - aber nicht ausschließlich - für Reduzierstücke und Verbinder für Rohre oder ähnliches, umfassend die Schritte:
- Heißfließpressen eines Streifens (13) aus polymerem Material einer vorgegebenen Breite und Dicke;
- Rollen eines Streifens (13) aus polymerem Material auf einen rotierenden Zylinder (14) zur Bildung eines torusförmigen Körpers (15), der vorgegebene innere und äußere Durchmesser aufweist, wobei die Dicke des torusförmigen Körpers durch einen Gegenzylinder (16) festgelegt ist, der oberhalb des Zylinders (14) und parallel dazu In einem einstellbaren Abstand angeordnet ist,
- Einführen des torusförmigen Körpers (15) In eine Form (23), deren Teile (24, 25) einen rotationskörperartig geformten Hohlraum bilden,
- Schließen der Teile (24, 25) der Form (23) mit einer festgelegten Schließkraft,
- Abwarten, bis sich der Rotationsgegenstand durch Abkühlen innerhalb der Form gebildet hat,
- Öffnen der Form und Herausnehmen des hergestellten Rotationsgegenstandes.

2. Verfahren nach Anspruch 1, **dadurch gekennzeichnet, dass** es nach dem Schritt des Herausnehmens des Gegenstandes aus der Form (23) und nach dem Warten einer vorgegebenen Zeit zum Erreichen der Formstabilität des Gegenstandes einen Schritt zur Bereinigung des Gegenstandes umfasst, um im Wesentlichen Im Bezug auf das Nennmaß überschüssiges Material zu entfernen.

3. Verfahren nach einem oder mehreren der vorgenannten Ansprüche, **dadurch gekennzeichnet, dass** das polymere Material ein Polypropylen- oder Polyethylen-Harz ist.

4. Verfahren nach einem oder mehreren der vorgenannten Ansprüche, **dadurch gekennzeichnet, dass** der Steifen (13) eine Breite zwischen 60 mm und 300 mm umfasst und dass der Streifen (13) eine Dicke zwischen 4 mm und 10 mm umfasst.

## Revendications

1. Procédé pour fabriquer des objets de révolution réalisés en matériau polymère, en particulier, mais non exclusivement, des réducteurs et raccords pour tuyaux ou équivalents, comprenant les étapes consistant à :
- réaliser une extrusion à chaud d'une bande (13) de matériau polymère de largeur et d'épaisseur prédéfinies,
- rouler ladite bande (13) de matériau polymère sur un tambour rotatif (14) de manière à former un corps toroïdal (15) qui a des diamètres intérieur et extérieur prédéfinis, l'épaisseur dudit corps toroïdal étant déterminée par un contre-tambour (16) qui est agencé au-dessus dudit tambour (14) et parallèle à celui-ci à une distance réglable,
- insérer ledit corps toroïdal (15) dans un moule (23), dont les parties (24, 25) forment une cavité formée comme un corps de révolution,
- fermer les parties (24, 25) dudit moule (23) avec une force de fermeture donnée,
- attendre la formation de l'objet de révolution par refroidissement à l'intérieur du moule,
- ouvrir le moule et extraire l'objet de révolution fabriqué,

2. Procédé selon la revendication 1, **caractérisé en ce qu'**il comprend, après l'étape d'extraction dudit objet du moule (23) et après attente d'une durée prédéfinie pour atteindre la stabilité dimensionnelle dudit objet, une étape de rectification dudit objet pour éliminer l'excès de matériau sensiblement en fonction des dimensions nominales.

3. Procédé selon l'une ou plusieurs des revendications précédentes, **caractérisé en ce que** ledit matériau polymère est une résine de polypropylène ou polyéthylène.

4. Procédé selon l'une ou plusieurs des revendications précédentes, **caractérisé en ce que** la largeur de ladite bande (13) est comprise entre 60 mm et 300 mm et **en ce que** l'épaisseur de ladite bande (13) est comprise entre 4 mm et 10 mm.
